# EUROPEAN PATENT SPECIFICATION

(11) **EP 2 330 923 B1**
(45) Date of publication and mention of the grant of the patent: **26.10.2016**
(21) Application number: 09783602.7
(22) Date of filing: 30.09.2009
(51) Int. Cl.: A23L 27/21, A23L 27/26

(54) **PROCESS TO MAKE FOOD OR FEED FLAVOUR WITH GLUTATHIONE OR CYSTEIN**
VERFAHREN ZUR HERSTELLUNG VON LEBENSMITTELAROMA MIT CYSTEINE ODER GLUTATHIONE
PROCÉDÉ DE PRÉPARATION D'ARÔME ALIMENTAIRE COMPRENANT DE LA CYSTÉINE OU DU GLUTATHION

(30) Priority: 03.10.2008 EP 08165824; 24.04.2009 EP 09158722
(43) Date of publication of application: 15.06.2011
(73) Proprietor: DSM IP Assets B.V., 6411 TE Heerlen (NL)
(72) Inventor: KORTES, Jan, Gerrit, NL-3833 HV Leusden (NL)
(74) Representative: Kuster, Janaart Frans
(86) International application number: PCT/EP2009/062694
(87) International publication number: WO 2010/037783

(56) References cited:
- EP-A- 1 008 305
- US-A- 3 519 437
- US-A- 4 592 917

## Description

### Field of the invention

This invention relates to a process for producing a food or feed flavour and to the product obtainable by this process.

### Background of the invention

The flavour of meat is the result of a complex combination of different reaction pathways occurring during cooking. The Maillard reaction between amino acids and reducing sugars, the related Strecker degradation of amino acids in presence of Maillard-derived dicarbonyl compounds and the auto-oxidation of lipids are the most important examples. All these reactions, their products and their influence on the taste of food have been the subject of several studies (Motram D.S., (1998) Food Chemistry, 62, pp. 415-424, "Flavour formation in meat and meat products: a review" and references therein; Schrödter, R., Schliemann, R., Woelm, G., (1988) Tech. Charact. Prod. Appl. Food Flavours, pp. 107-114, "Study on the effect of fat in meat flavour formation").

The preparation of food or feed flavours by reacting reducing saccharides with a sulphur-containing amino acid (esp. cystein) is well known in the art. For example, US4,592,917 describes the preparation of a boiled chicken flavour by reacting a reducing saccharide with an amino acid (leucine) and a sulphur-containing substance (e.g. cystein) at a temperature of less than 100°C.

### Description of the invention

The invention provides a process for producing a food or feed flavour, the process comprising the steps of
a) preparing a composition comprising cystein and/or glutathione and more than 0.1 % w/w fat to less than 10% w/w fat based on the total weight of the composition,
b) incubating the composition at a temperature between 140 and 210°C and a reaction time sufficient for the food or feed flavour to develop,
c) optionally mixing the food or feed flavour with one or more other ingredients.

The food or feed flavour may be any flavour. The food or feed flavour may be a flavour of fresh or processed food or feed. Processed food or feed includes, but is not limited to, food or feed that has been boiled, fermented, braised, cooked, grilled, roasted, toasted, smoked, and fried, or a combination of any of these. Examples of food or feed flavours include vegetable flavours such as onion, peanut, cabbage such as cauliflower, broccoli, Brussels sprout, Chinese kale or Chinese broccoli, kale or spring greens, collard greens, and kohlrabi, cocoa, chocolate, coffee, and meat flavours. Meat flavours include but are not limited to poultry flavours such as flavours of chicken, turkey, pheasant, goose, swan, and duck, or other meat flavours such as the flavours of beef, lamb, sheep, goat, horse, and pork. Preferably the feed or food flavour is a meat flavour. Said vegetable and meat flavours may be boiled, braised, cooked, grilled, roasted, smoked, and fried and flavours. Preferably the feed or food flavour is a meat flavour, more preferably a poultry flavour. Most preferably the feed or food flavour is a chicken flavour.

The food or feed flavour produced by the process of the invention may be a general roast flavour or a sulphury flavour. Sulphury flavours may for example have a flavour of H₂S, methyl-furan-thiol, or mercaptanes such as methylmercaptanes. Sulphury flavours are used in the flavour industry as so-called "building blocks" to generate a wealth of flavours such as beef, chicken, etceteras. The food or feed flavour produced by the process of the invention may be further processed and/or mixed with other ingredients and/or flavours to adjust or modify said food or feed flavour.

The composition in step (a) may comprise additional components. For example the composition in step may comprise one or more reducing sugars such as dextrose or glucose. By adding reducing sugars to the composition of step (a) it may be possible to specifically prepare a beef, lamb, or pork flavour.

The food or feed flavour produced with the process of the invention is preferably suitable to enhance or impart a desired flavour to a food or feed product, for example to impart a flavour which the food of feed product is lacking, or to enhance an existing flavour of a food or feed product. The food or feed flavour produced with the process of the invention is highly concentrated, i.e. the food or feed flavour is very strong, such that adding small amounts of the food or feed flavour to food or feed may already be sufficient to provide the desired flavour. Because the food or feed flavour is so concentrated the food or feed flavour produced with the process of the invention is preferably not suitable for consumption undiluted. Based on the application, the food or feed flavour produced with the process of the invention is preferably added to food or feed in an amount to arrive at a final concentration between 0.01% and 5% w/w, preferably between 0.05 and 1% w/w, more preferably between 0.1 and 0.5% w/w based on the total weight of the food or feed.

In the context of the invention "fat" is defined as a compound comprising a fatty acid esterified to glycerol. Fat is understood to encompass mono-, di-, and triglycerides. In the context of the invention "fat" and "oil" are the same. Depending on the composition of the fat (such as the number of the fatty acids, their chain length and degree of saturation), at normal room temperature fats may either solid or liquid. Fats that are liquid at normal room temperature are generally referred to as oils. Therefore, "a composition comprising cystein and/or glutathione and less than 10% w/w oil based on the total weight of the composition" also falls under the scope of the invention. Preferably, the amount of fat in the composition is less than 5% w/w, more preferably less than 2% w/w, 1.5%, even more preferably less than 1.4%, 1.3%, 1.2% 1.1% w/w, most preferably less than 1% w/w based on the total weight of the composition. The amount of fat in the composition is more than 0.1% w/w based on the total weight of the composition. A low amount of fat (e.g. less than 10% w/w) may advantageously be healthy. A food or feed flavour comprising less than 10% fat may be better suitable to be mixed with other components, particularly dry components, since it may result in no or little formation of lumps. A small amount of fat (e.g. at least 0.1% w/w) in the composition may advantageously render the product having a food or feed flavour less friable and thereby prevent it to give off dust or powder. Fat may be added to the composition in step (a) and/or step (b) oil of the process of the invention. In a preferred embodiment the fat is a hydrogenated sunflower oil Adding animal fat to the composition in step (a) may result in a richer, fuller, and/or fatter food or feed flavour.

The amount of cystein and/or glutathione in the composition may be anywhere between 1% and 100%. Preferably, in order to obtain a desired food or feed flavour flavour the amount of cystein and/or glutathione is between 2% and 25%, more preferably between 3% and 10% w/w of the composition.

Preferably, the temperature in step (b) of the process of the invention is between 120°C and 200°C, more preferably between 140°C and 190°C, most preferably between 160°C and 180°C.

Higher incubation temperatures may give the food or feed flavour a desired roast note. When the incubation temperature is too high (e.g. >210°C), however, the food or feed flavour may have burnt off notes. On the other hand, when the incubation temperature is below 110°C the incubation may proceed very slowly or not at all, resulting in no food or feed flavour formed, or, due to the prolonged incubation time required, in a food or feed flavour having undesired off-notes. At lower incubation temperatures (for example between 110°C and 150°C) cooked or boiled food or feed flavours may be produced, whereas at higher incubation temperatures (e.g. between 150 and 210°C) roast, grilled, or fried food or feed flavours may be produced.

In a preferred embodiment the water content of the composition in step (b) of the process of the first aspect of the invention is between 1 and 20% w/w, more preferably between 1 and 10% w/w, between 1 and 8%, even more preferably between 1 and 7% w/w, 1 and 6% w/w, most preferably between 1 and 5% w/w based on the total weight of the composition. The water content of the composition in step (b) of the process of the first aspect of the invention may be important for obtaining a desired feed or food flavour. When the water content of the composition is too high, e.g. more than 20% w/w, the temperature of the composition may not exceed 110°C, and the desired feed or food flavour may not develop and/or undesired off-notes may develop and/or the food or feed flavour may lack a roast note. When the water content is too low, e.g. less than 1% w/w, the composition is likely to burn and as a result undesired burnt off-notes may be formed. Thus, a water content between 1 and 20% w/w of the composition in step (b) of the process of the invention may make it possible to tune the process conditions, particularly to vary the incubation temperatures such that a range of food or feed flavours may be produced.

The skilled person will understand that the incubation time in step (b) of the process of the invention depends on the incubation temperature as well as on the water content and on the desired food or feed flavour. At higher incubation temperatures the incubation time may be shorter in order to obtain the desired food or feed flavour, whereas at lower incubation temperatures the incubation time may be longer in order to obtain the desired food or feed flavour. Likewise, at lower water content the incubation time may be shorter, whereas at higher water content the incubation time may be longer. Likewise, at higher temperatures and/or longer incubation times and/or lower water content the flavour may be more roasty, whereas at lower temperatures and/or shorter incubation times and/or higher water content the flavour may be boiled-type flavours. The skilled person may therefore, without undue burden, establish suitable conditions with respect to temperature, time and water content in order to obtain the desired food or feed flavour.

In a preferred embodiment, the composition of the process of the present invention may comprise yeast extract and/or yeast autolysate. The Food Chemical Codex defines a "yeast extract" as follows: *"Yeast Extract comprises the water soluble components of the yeast cell, the composition of which is primarily amino-acids, peptides, carbohydrates and salts. Yeast extract is produced through the hydrolysis of peptide bonds by the naturally occurring enzymes present in edible yeast or by the addition of food-grade enzymes".* The Food Chemical Codex defines "autolysed yeast" as *"the concentrated, nonextracted, partially soluble digest obtained from food-grade yeast. Solubilization is accomplished by enzyme hydrolysis or autolysis of yeast cells. Food-grade salts and enzymes may be added. Yeast, autolyzed, contains both soluble and insoluble components derived from the whole yeast cell. It is composed primarily of amino acids, peptides, carbohydrates, fats, and salts*". The yeast extract and/or yeast autolysate may be produced from any type of food-grade yeast, for example baker's yeast, beer yeast or wine yeast. Preferably, the yeast extract and/or yeast autolysate is produced from a yeast strain belonging to the genera *Saccharomyces, Kluyveromyces, Candida* or *Torula* is used. In a preferred embodiment the yeast extract and/or yeast autolysate is produced from a yeast strain belonging to the genus *Saccharomyces,* i.e. *Saccharomyces cerevisiae.*

In a preferred embodiment, the yeast extract and/or yeast autolysate is a glutathione containing yeast extract and/or glutathione containing yeast autolysate and/or a cystein containing yeast extract and/or cystein containing yeast autolysate. The skilled person may combine more than one yeast extract and/or yeast autolysate in a ratio which will result in the desired amount of glutathione and/or cystein in the composition of the process of the invention. For example, he may combine a yeast extract and/or yeast autolysate with a low amount of glutathione with a yeast extract and/or yeast autolysate with a high amount of glutathione such that the resulting blend has the desired amount of glutathione. Similarly, he may combine a yeast extract and/or yeast autolysate with a low amount of cystein with a yeast extract and/or yeast autolysate with a high amount of cystein such that the resulting blend has the desired amount of cystein. Likewise, he may combine a cystein containing yeast extract and/or yeast autolysate with a glutathione containing yeast extract and/or yeast autolysate and optionally a yeast extract and/or yeast autolysate which does not contain cystein and glutathione such that the resulting blend has the desired amount of glutathione and cystein. In a preferred embodiment, the yeast extract and/or yeast autolysate is a glutathione containing yeast extract and/or yeast autolysate.

In a preferred embodiment the incubation in step (b) of the invention is carried out in an extruder. The extruder may be any type of extruder suitable for the production of process flavours such as a twin extruder. Extruders, e.g. twin extruders, are known in the art. The composition of the invention, and optionally water and/or oil, may be introduced into the extruder through the same or separate feeders. The product may leave the extruder at a pressure, outside the extruder, varying from reduced pressure (e.g. 5 mbar) to atmospheric pressure (e.g. approximately 1 bar). The product extruded may be further cooled and/or dried using a cooling belt or any other method known in the art. Extrusion may result in a uniform, or nearly uniform distribution of the components over the composition, resulting in a homogenous product. A homogenous product may be advantageous since the flavour may be evenly spread over the food or feed. Due to the elevated temperature and/or pressure deployed in an extruder the components of composition may turn into a so-called "melt". As the extruded product leaves the extruder and is subsequently cooled, the melt may solidify to form a solid state, also referred to as a "glassy state". Such a glassy state may be physically and chemically stable. The individual components of a glassy state product may be no longer distinguishable or separable after extrusion and may therefore advantageously not separate upon storage for prolonged time, e.g. for more than a week or more than a month. In the context of the invention "separation", amongst others, includes sedimentation and phase separation. A glassy state may limit or inhibit oxygen diffusion and therefore oxidation of the flavour.

The other ingredients in step (c) of the process may be for example a yeast extract and/or yeast autolysate, a protein hydrolysate, soy sauce, herbs, spices, salts, and any other condiment. The product may be advantageously mixed with other ingredients to dilute the feed or food flavour, for example when the feed or food flavour of the product is too strong to be used directly and undiluted in the food, or to make a ready-to-use seasoning.

In a further aspect the invention provides a food or feed flavour obtainable by the process of the invention. Preferably, the feed or food flavour has a chicken flavour, more preferably a roasted chicken flavour. A roasted chicken flavour may advantageously be used in applications where a roast chicken flavour is desired, such as potato crips or chips, snacks, meat replacers such as tofu, fermented soy products, soups, oriental food and seasonings for the same, and may also be used to give more chicken flavour and/or a deeper chicken flavour, particularly a roast chicken flavour, to actual chicken meat.

In a further aspect the invention provides a seasoning comprising the food or feed flavour of the invention. A seasoning is a mixture of food or feed ingredients, usually consisting of herbs and salt, to be added to food or feed to impart or enhance flavour. The seasoning is preferably a food or feed seasoning. Preferably, the amount of the food or feed flavour of the invention in the seasoning is between 0.5 and 10% w/w, more preferably between 1 and 5 % w/w, most preferably between 2 and 4 % w/w based on the total weight of the seasoning.

In a further aspect the invention provides food or feed comprising the feed or food flavour of the invention. Due to the low amount of fat of the feed or food flavour, feed or food comprising the feed or food flavour of the invention may be appreciated better by the consumer, for example because the appearance of the food may be better. Food or feed comprising a low amount of fat may appear less greasy and/or may result in fewer or no oil drops floating on the surface of e.g. soup, which may lead to increased
appetite. Preferably, the amount of food or feed flavour of the invention is between 0.01 and 5% w/w, more preferably between 0.05 and 1% w/w, most preferably between 0.1 and 0.5 % w/w based on the total weight of the food or feed.

In a further aspect the invention provides the use of the feed or food flavour of the invention or the seasoning of the invention to impart or enhance flavour in food or feed. The feed or food flavour of the invention or the seasoning of the invention may be used for flavouring food products like soups, meat, pasta, crisps, snacks, vegetables etc. The feed or food flavour of the invention or the seasoning of the invention may be added to the food or feed in the process of preparation (e.g. in the kitchen) or when the food or feed is ready for consumption, e.g. on the table. The feed or food flavour of the invention or the seasoning of the invention may already be effective in diluted concentrations and may therefore be used in a cost-effective manner in the application. By varying the amount of feed or food flavour of the invention or the seasoning of the invention in the food or feed the skilled person may, without undue burden, establish suitable amounts of food or feed flavour in order to enhance or impart a suitable flavour. The food or feed flavour of the invention is preferably added to food or feed in an amount to arrive at a final concentration between 0.01% and 5% w/w, preferably between 0.05 and 1% w/w, more preferably between 0.1 and 0.5% w/w based on the total weight of the food or feed.

### EXAMPLES

### Example 1

### Preparation of chicken flavour

To a twin-screw extruder, equipped with a dosing unit and injector for water and a dosing unit and injector for oil, a composition comprising a glutathione containing yeast extract was added using a separate feeder. Three different compositions (compositions 1-2 and comparative composition 3, see Table 1) were used.

The product formed left the extruder in a room under atmospheric pressure and was cooled and dried on a cooling belt equipped with a pressure roll, and subsequently ground and sampled.

**Table 1. Composition**

| | Composition 1 (% w/w on dry matter) | Composition 2 (% w/w on dry matter) | Composition 3 (% w/w on dry matter) |
|---|---|---|---|
| Residence time | 1 minute | 1 minute | 1 minute |
| Temperature of the composition | 175°C | 180°C | 175°C |
| Gistex^{®} LS powder (DSM Food Specialties-The Netherlands | 78 | 32 | 98 |
| Yeast extract containing 15% w/w glutathione (based on dry matter) | 20 | 66 | 0 |
| Water | 1.0 | 1.0 | 1.0 |
| Hydrogenated sunflower oil | 1.0 | 1.0 | 1.0 |

The products were tested by an expert panel by making a 0.25% w/w aqueous solution of the product. The solution made of composition 1 was characterized as having a roast chicken flavour. The solution made of composition 2 was characterized as having also a roast chicken flavour. However, the chicken flavour of the solution made of composition 2 was much more intense as compared to the chicken flavour of the solution made of composition 1. This shows that the amount of glutathione in the composition in the process of the invention has an effect on the intensity of the chicken flavour. The product of composition 3 was characterised as having general roast flavour.

### Example 2

### Preparation of beef flavour

To a twin-screw extruder, equipped with a dosing unit and injector for water and a dosing unit and injector for oil, a composition according to Table 2, said composition comprising a glutathione containing yeast extract, was added using a separate feeder.

The product formed left the extruder in a room under atmospheric pressure and was cooled and dried on a cooling belt equipped with a pressure roll, and subsequently ground and sampled.

**Table 2. Composition**

| | Composition 4 (% w/w on dry matter) |
|---|---|
| Residence time | 1 minute |
| Temperature of the composition | 170°C |
| Gistex^{®} LS powder (DSM Food Specialties-The Netherlands | 53 |
| Yeast extract containing 15% w/w glutathione (based on dry matter) | 30 |
| Water | 1.0 |
| Hydrogenated sunflower oil | 1.0 |
| Dextrose | 15 |

The product was tested by an expert panel by making a 0.5% w/w aqueous solution of the product. The product was characterized as having a roasty, beef flavour.

## Claims

1. Process for producing a food or feed flavour, the process comprising
a) preparing a composition comprising cystein and/or glutathione and less than 10% w/w and more than 0.1% w/w fat based on the total weight of the composition,
b) incubating the composition at a temperature between 140 and 210°C and a reaction time sufficient for the food or feed flavour to develop,
c) optionally mixing the process flavour having a food or feed flavour with one or more other ingredients

2. Process according to claim 1 wherein the food or feed flavour is a chicken flavour.

3. Process according to claim 1 or 2 wherein the amount of fat in the composition is less than 5% w/w and more than 0.1% w/w based on the total weight of the composition.

4. Process according to any one of claims 1 to 3 wherein the fat is a hydrogenated sunflower oil.

5. Process according to any one of claims 1 to 4 wherein the amount of glutathione and/or cystein in the composition is between 1 and 100% based on the total weight of the composition.

6. Process according to any one of claims 1 to 5 wherein the temperature of the composition in step (b) is between 160°C and 180°C.

7. Process according to any one of claims 1 to 6 wherein the water content of the composition is between 1 and 20% w/w based on the total weight of the composition.

8. Process according to any one of claims 1 to 7 wherein the composition comprises yeast extract and/or yeast autolysate.

9. Process according to claim 8 wherein the yeast extract and/or yeast autolysate is a glutathione containing yeast extract and/or glutathione containing yeast autolysate and/or a cystein containing yeast extract and/or cystein containing yeast autolysate.

10. Process according to any one of claims 1 to 9, wherein in step (b) the incubation is carried out in an extruder.

11. Food or feed flavour obtainable by the process of any one of claims 1-10.

12. Food or feed flavour according to claim 11 wherein the flavour is a chicken flavour.

13. Seasoning comprising the food or feed flavour of claim 11 or 12.

14. Seasoning according to claim 13 wherein the amount of food or feed flavour is between 0.5 and 10% w/w based on the total weight of the seasoning.

15. Food or feed comprising the feed or food flavour of claim 11 or 12 or the seasoning of claim 13 or 14.

16. Food or feed according to claim 15 wherein the amount of feed or food flavour is between 0.01 and 5% w/w based on the total weight of the food or feed.

17. Use of the food or feed flavour of claim 11 or 12 or the seasoning of claim 13 or 14 to impart or enhance flavour in food or feed.

18. Use according to claim 17 wherein the food or feed flavour is added to the food or feed in an amount to arrive at a final concentration between 0.01% and 5% w/w based on the total weight of the food or feed.

## Patentansprüche

1. Verfahren zum Herstellen eines Lebensmittel- oder Futtermittelaromas, wobei das Verfahren umfasst:
a) Herstellen einer Zusammensetzung, die Cystein und/oder Glutathion und weniger als 10 % Gew./Gew. und mehr als 0,1 % Gew./Gew. Fett bezogen auf das Gesamtgewicht der Zusammensetzung umfasst, und
b) Inkubieren der Zusammensetzung bei einer Temperatur zwischen 140 und 210 °C und einer Reaktionszeit, die zum Entwickeln des Lebensmittel- oder Futtermittelaromas ausreicht,
c) gegebenenfalls Mischen des Verfahrensaromas, das ein Lebensmittel- oder Futtermittelaroma aufweist, mit einem oder mehreren anderen Inhaltsstoffen.

2. Verfahren gemäß Anspruch 1, wobei das Lebensmittel- oder Futtermittelaroma ein Hühneraroma ist.

3. Verfahren gemäß Anspruch 1 oder 2, wobei die Menge an Fett in der Zusammensetzung weniger als 5 % Gew./Gew. und mehr als 0,1 % Gew./Gew. bezogen auf das Gesamtgewicht der Zusammensetzung beträgt.

4. Verfahren gemäß einem der Ansprüche 1 bis 3, wobei das Fett ein hydriertes Sonnenblumenöl ist.

5. Verfahren gemäß einem der Ansprüche 1 bis 4, wobei die Menge an Glutathion und/oder Cystein in der Zusammensetzung zwischen 1 und 100 % bezogen auf das Gesamtgewicht der Zusammensetzung beträgt.

6. Verfahren gemäß einem der Ansprüche 1 bis 5, wobei die Temperatur der Zusammensetzung bei Schritt (b) zwischen 160 °C und 180 °C beträgt.

7. Verfahren gemäß einem der Ansprüche 1 bis 6, wobei der Wassergehalt der Zusammensetzung zwischen 1 und 20 % Gew./Gew. bezogen auf das Gesamtgewicht der Zusammensetzung beträgt.

8. Verfahren gemäß einem der Ansprüche 1 bis 7, wobei die Zusammensetzung Hefeextrakt und/oder Hefeautolysat umfasst.

9. Verfahren gemäß Anspruch 8, wobei der Hefeextrakt und/oder das Hefeautolysat ein glutathionhaltiger Hefeextrakt und/oder glutathionhaltiges Hefeautolysat und/oder ein cysteinhaltiger Hefeextrakt und/oder cysteinhaltiges Hefeautolysat ist.

10. Verfahren gemäß einem der Ansprüche 1 bis 9, wobei bei Schritt (b) die Inkubation in einem Extruder durchgeführt wird.

11. Lebensmittel- oder Futtermittelaroma, erhältlich durch das Verfahren gemäß einem der Ansprüche 1-10.

12. Lebensmittel- oder Futtermittelaroma gemäß Anspruch 11, wobei das Aroma ein Hühneraroma ist.

13. Würzmittel, umfassend das Lebensmittel- oder Futtermittelaroma gemäß Anspruch 11 oder 12.

14. Würzmittel gemäß Anspruch 13, wobei die Menge an Lebensmittel- oder Futtermittelaroma zwischen 0,5 und 10 % Gew./Gew. bezogen auf das Gesamtgewicht des Würzmittels beträgt.

15. Lebensmittel oder Futtermittel umfassend das Lebensmittel- oder Futtermittelaroma gemäß Anspruch 11 oder 12 oder das Würzmittel gemäß Anspruch 13 oder 14.

16. Lebensmittel oder Futtermittel gemäß Anspruch 15, wobei die Menge an Lebensmittel- oder Futtermittelaroma zwischen 0,01 und 5 % Gew./Gew. bezogen auf das Gesamtgewicht des Lebensmittels oder Futtermittels beträgt.

17. Verwendung des Lebensmittel- oder Futtermittelaromas gemäß Anspruch 11 oder 12 oder des Würzmittels gemäß Anspruch 13 oder 14 zum Verleihen von Aroma an Lebensmittel oder Futtermittel oder Verstärken davon.

18. Verwendung gemäß Anspruch 17, wobei das Lebensmittel- oder Futtermittelaroma dem Lebensmittel oder Futtermittel in einer Menge zum Erreichen einer Endkonzentration zwischen 0,01 % und 5 % Gew./Gew. bezogen auf das Gesamtgewicht des Lebensmittels oder Futtermittels zugegeben wird.

## Revendications

1. Procédé de production d'un arôme pour aliment pour l'homme ou l'animal, le procédé comprenant
a) la préparation d'une composition comprenant de la cystéine et/ou du glutathion et moins de 10% p/p et plus de 0,1% p/p de matière grasse sur la base du poids total de la composition,
b) l'incubation de la composition à une température comprise entre 140 et 210°C et un temps de réaction suffisant pour que l'arôme pour aliment pour l'homme ou l'animal se développe,
c) éventuellement le mélange de l'arôme de procédé ayant un arôme pour aliment pour l'homme ou l'animal avec un ou plusieurs autres ingrédients.

2. Procédé selon la revendication 1, dans lequel l'arôme pour aliment pour l'homme ou l'animal est un arôme de poulet.

3. Procédé selon la revendication 1 ou 2, dans lequel la quantité de matière grasse dans la composition est inférieure à 5% p/p et supérieure à 0,1% p/p sur la base du poids total de la composition.

4. Procédé selon l'une quelconque des revendications 1 à 3, dans lequel la matière grasse est une huile de tournesol hydrogénée.

5. Procédé selon l'une quelconque des revendications 1 à 4, dans lequel la quantité de glutathion et/ou de cystéine dans la composition est comprise entre 1 et 100% sur la base du poids total de la composition.

6. Procédé selon l'une quelconque des revendications 1 à 5, dans lequel la température de la composition dans l'étape (b) est comprise entre 160°C et 180°C.

7. Procédé selon l'une quelconque des revendications 1 à 6, dans lequel la teneur en eau de la composition est comprise entre 1 et 20% p/p sur la base du poids total de la composition.

8. Procédé selon l'une quelconque des revendications 1 à 7, dans lequel la composition comprend un extrait de levure et/ou un autolysat de levure.

9. Procédé selon la revendication 8, dans lequel l'extrait de levure et/ou l'autolysat de levure est un extrait de levure contenant du glutathion et/ou un autolysat de levure contenant du glutathion et/ou un extrait de levure contenant de la cystéine et/ou un autolysat de levure contenant de la cystéine.

10. Procédé selon l'une quelconque des revendications 1 à 9, dans lequel, dans l'étape (b), l' incubation est effectuée dans une extrudeuse.

11. Arôme pour aliment pour l'homme ou l'animal, pouvant être obtenu par le procédé selon l'une quelconque des revendications 1-10.

12. Arôme pour aliment pour l'homme ou l'animal selon la revendication 11, où l'arôme est un arôme de poulet.

13. Assaisonnement comprenant l'arôme pour aliment pour l'homme ou l'animal selon la revendication 11 ou 12.

14. Assaisonnement selon la revendication 13, dans lequel la quantité d'arôme pour aliment pour l'homme ou l'animal est comprise entre 0,5 et 10% p/p sur la base du poids total de l'assaisonnement.

15. Aliment pour l'homme ou l'animal comprenant l'arôme pour aliment pour l'homme ou l'animal selon la revendication 11 ou 12, ou l'assaisonnement selon la revendication 13 ou 14.

16. Aliment pour l'homme ou l'animal selon la revendication 15, dans lequel la quantité d'arôme pour aliment pour l'homme ou l'animal est comprise entre 0,01 et 5% p/p sur la base du poids total de l'aliment pour l'homme ou l'animal.

17. Utilisation de l'arôme pour aliment pour l'homme ou l'animal selon la revendication 11 ou 12, ou de l'assaisonnement selon la revendication 13 ou 14, afin de conférer ou d'améliorer l'arôme dans un aliment pour l'homme ou l'animal.

18. Utilisation selon la revendication 17, dans laquelle l'arôme pour aliment pour l'homme ou l'animal est ajouté à l'aliment pour l'homme ou l'animal selon une quantité destinée à parvenir à une concentration finale comprise entre 0,01% et 5% p/p sur la base du poids total de l'aliment pour l'homme ou l'animal.
